# EUROPÄISCHE PATENTSCHRIFT

(11) **EP 2 063 136 B1**
(45) Veröffentlichungstag und Bekanntmachung des Hinweises auf die Patenterteilung: **15.06.2016**
(21) Anmeldenummer: 08167558.9
(22) Anmeldetag: 24.10.2008
(51) Int. Cl.: F16B 41/00

(54) **Verbindungselement mit einer Schraube und einer daran unverlierbar angeordneten Hülse**
Fastening element with attachable captive washer sleeve
Elément de fixation comprenant une douille imperdable attachable

(30) Priorität: 26.11.2007 DE 102007047860
(43) Veröffentlichungstag der Anmeldung: 27.05.2009
(73) Patentinhaber: KAMAX Holding GmbH & Co. KG, 35315 Homberg (Ohm) (DE)
(72) Erfinder: Hartmann, Gunther, 36304 Alsfeld (DE)
(74) Vertreter: REHBERG HÜPPE + PARTNER

(56) Entgegenhaltungen:
- EP-B1- 1 055 829
- DE-A1- 10 215 883
- DE-A1-102005 002 603
- DE-A1-102005 017 880
- GB-A- 487 369

## Beschreibung

### TECHNISCHES GEBIET DER ERFINDUNG

Die Erfindung betrifft ein Verbindungselement mit einer Schraube und einer Hülse. Die Schraube weist einen Kopf, einen Schaftabschnitt und einen Gewindeabschnitt mit einem Gewinde auf. Der Schaftabschnitt ist dem Kopf zugekehrt und der Gewindeabschnitt von dem Kopf abgekehrt angeordnet. Der Schaftabschnitt besitzt einen Durchmesser, der kleiner als der Außendurchmesser des Gewindes des Gewindeabschnitts ist. Die Hülse besitzt eine erste Engstelle mit einem Durchmesser, der kleiner als der Außendurchmesser des Gewindes des Gewindeabschnitts ist.

Im Rahmen der vorliegenden Erfindung ist immer dann von einem "Verbindungselement" die Rede, wenn eine Schraube und eine Hülse zu einem Element verbunden sind. Ein solches Verbindungselement kann dann insbesondere zu mehreren in eine Transportstellung gelangen, in der es vom Schraubenhersteller z. B. an einen weiteren Hersteller geliefert wird, der insbesondere mehrere solche Verbindungselemente mit einem Bauteil - insbesondere einem Deckel, einer Haube oder dergleichen - zu einer vormontierten Baueinheit montiert. Die "vormontierte Baueinheit" besteht also aus einem Bauteil mit in der Regel mehreren daran montierten Verbindungselementen. Auch diese vormontierte Baueinheit gelangt dann wiederum in eine Transportstellung, z. B. zu einem Automobilhersteller, in dessen Montagelinie die vormontierte Baueinheit mit einem zugehörigen anderen Bauteil - insbesondere einem Unterteil - wie einem Zylinderblock, einem Getriebegehäuse oder dergleichen - verbunden wird. Bei dieser "Endmontage" werden die Schrauben der Verbindungselemente an der vormontierten Baueinheit insbesondere in Gewindelöcher im zugehörigen anderen Bauteil eingeschraubt.

### STAND DER TECHNIK

Ein Verbindungselement ist aus der DE 102 15 883 A1 bekannt. Das Verbindungselement weist eine Schraube und eine daran unverlierbar angeordnete Hülse auf. Die Hülse ist als Formkörper mit in Umfangsrichtung geschlossener zylindrischer Wandung ausgebildet und besitzt mindestens einen radial nach außen ragenden Flansch. Die Schraube besitzt einen Kopf und einen Schaft, auf dem dem Kopf abgekehrt ein Gewindeabschnitt und dem Kopf zugekehrt einen Schaftabschnitt mit einem gegenüber dem Außendurchmesser des Gewindeabschnitts reduzierten Durchmesser angeordnet sind. Die Hülse weist eine Engstelle mit kleinerem Durchmesser als der Außendurchmesser des Gewindeabschnitts auf, die mit dem dem Kopf zugekehrten Endbereich des Gewindeabschnitts zusammenarbeitet und eine Hinterschneidung bildet. Die Hinterschneidung bildet einen festen unnachgiebigen Anschlag.

Ein weiteres Verbindungselement ist aus der DE 199 24 502 A1 bzw. der EP 1 055 829 B1 bekannt. Das eine Element des Verbindungselements ist eine Schraube, die einen Kopf mit einer Kopfauflagefläche und einen Schaft aufweist. Der Schaft ist in einen zylindrischen Schaftabschnitt und einen mit Gewinde versehenen Gewindeabschnitt unterteilt, wobei der Schaftabschnitt kopfseitig, also dem Kopf bzw. der Auflagefläche des Kopfs der Schraube zugekehrt, angeordnet ist, während der Gewindeabschnitt mehr oder weniger am freien Ende des Schafts der Schraube angeordnet ist. Das andere Element des Verbindungselements ist eine Hülse. Die Hülse kann geschlitzt ausgebildet sein. Nach der Verbindung von Schraube und Hülse ist das Verbindungselement hergestellt. Die Schraube ist durch eine Engstelle an der Hülse unverlierbar und begrenzt axial verschiebbar gehalten. Die Engstelle weist einen kleineren Durchmesser auf, als es dem Außendurchmesser des Gewindeabschnitts entspricht. Der Schaftabschnitt besitzt einen vergleichsweise reduzierten Durchmesser, also einen Durchmesser, der kleiner als der Außendurchmesser des Gewindes ausgebildet ist.

Aus der US 5,489,177 ist ein Verbindungselement mit einer Schraube und einer daran unverlierbar angeordneten Hülse mit Flansch bekannt. Die Schraube und die Hülse werden jeweils fertig bearbeitet separat hergestellt und erst anschließend axial miteinander zusammengefügt, wobei sich die Hülse im Bereich ihrer Engstellen weitgehend elastisch aufweitet und nach dem Überschnappen einer Wulst an dem Schaft der Schraube wiederum einen vergleichsweise kleineren Durchmesser einnimmt. Voraussetzung für diese Anwendung ist also eine aufgerollte Wulst an der Übergangsstelle zwischen dem Gewinde der Spezialschraube und dem reduzierten zylindrischen Schaftabschnitt. Herkömmliche Schrauben mit Schaft und Gewindeabschnitt können nicht eingesetzt werden. Die Engstelle an der Hülse wird durch axiale Materialverschiebung an ausgewählten Umfangsstellen gebildet.

Die DE 10 2005 002 603 A1 zeigt ein Verbindungselement mit einer Schraube und einer daran unverlierbar angeordneten Hülse. Die Hülse ist als Formkörper mit in Umfangsrichtung geschlossener zylindrischer Wandung ausgebildet und besitzt mindestens einen radial nach außen ragenden Flansch. Die eingesetzte Spezialschraube weist neben einem Schaftabschnitt und einem Gewindeabschnitt zumindest eine radial vorspringende umlaufende Wulst auf, die im Bereich des Schaftabschnitts mit reduziertem Durchmesser angeordnet ist. Die Hülse besitzt in Zuordnung zu der Wulst zwei Engstellen, die axial beabstandet angeordnet sind und mit der Wulst zusammenarbeiten. Auf diese Weise sind die Schraube und die Hülse unverlierbar aneinander gehalten. Die eine Engstelle ist vor dem Aufschieben der Hülse auf die Spezialschraube axial ausgerichtet und nach dem Aufschieben radial verformbar. Die andere Engstelle ist federnd ausgebildet, so dass ein Aufschieben der zylindrischen Hülse über den Gewindeabschnitt möglich ist.

### AUFGABE DER ERFINDUNG

Der Erfindung liegt die Aufgabe zugrunde, ein Verbindungselement, ein Verfahren zu dessen Herstellung sowie eine vormontierte Baueinheit bereitzustellen, bei denen die Schraube und die Hülse einfach getrennt voneinander herstellbar und danach zu dem Verbindungselement montierbar sind, wobei die begrenzte axiale Beweglichkeit der Schraube relativ zu der Hülse wesentlich reduziert ist.

### LÖSUNG

Die Aufgabe der Erfindung wird erfindungsgemäß mit den Merkmalen der unabhängigen Patentansprüche 1, 10 bzw. 11 gelöst.

### BESCHREIBUNG DER ERFINDUNG

Es hat sich gezeigt, dass es in bestimmten Anwendungsfällen wünschenswert ist, die Schraube so in der Hülse definiert zu positionieren, dass die Schraube mit ihrem dem Kopf abgewandten freien Ende nicht aus der Hülse herausragt. Ein solcher Anwendungsfall liegt z. B. bei einer vormontierten Baueinheit vor, d. h. bei einem ersten Bauteil mit einer Bohrung, in die die Hülse eingepresst ist. Diese vormontierte Baueinheit soll im Rahmen der Endmontage insbesondere mit einer Mehrzahl von Verbindungselementen mit einem zweiten Bauteil verschraubt werden. Durch diese definierte Lage der Schraube relativ zu der Hülse und dem ersten Bauteil kann die vormontierte Baueinheit frei über dem zweiten Bauteil verschoben bzw. positioniert werden. Eine etwaige Beschädigung der Montagefläche des zweiten Bauteils wird zuverlässig vermieden.

Das erfindungsgemäße Verbindungselement weist hülsenseitig zwei Engstellen auf, von denen die eine Engstelle nicht-federnd und die andere Engstelle federnd-nachgiebig ausgebildet ist. Beide Engstellen arbeiten mit dem an der Schraube ohnehin vorhandenen Gewindeabschnitt zusammen und sind auf diesen in besonderer Weise abgestimmt. Die erste Engstelle bildet mit dem kopfseitigen Endbereich des Gewindeabschnitts eine Anschlagpaarung im Sinne eines Anschlages und eines Gegenanschlages, der die Unverlierbarkeit sichert, in dieser Richtung wirkt und durch normalerweise auftretende Kräfte nicht überwunden werden kann. Die zweite Engstelle ist federnd-nachgiebig ausgebildet, wobei die freien Enden der federnden Elemente über die Spitzen der Gewindegänge des Gewindeabschnitts hinübertreten bzw. -ratschen können. Dies gilt zumindest in der einen Richtung, wenn die Schraube aus der Hülse teilweise herausgezogen oder herausgedrückt wird. Das Heraustreten wird durch Anschlagen der Anschlagpaarung der ersten Engstelle beendet. Damit wird die begrenzte axiale Verschiebbarkeit im Stand der Technik beseitigt oder reduziert. In der anderen Richtung, also beim weiteren Hineinschieben der Schraube kann je nach Gestaltung der freien Enden der federnden Elemente eine solche Bewegung zugelassen oder verhindert werden. Wenn die freien Enden widerhakenartig ausgebildet sind, wird diese Bewegung verhindert, so dass bei der Endmontage die Schraube vorteilhaft nur aus der Hülse herausgedreht werden kann.

Es kommen insbesondere normale Schrauben - im Gegensatz zu Spezialschrauben - zum Einsatz, die neben einem Kopf und einem Schaftabschnitt einen Gewindeabschnitt und in der Regel an dessen freien Ende auch einen Zentrierfortsatz aufweisen. Beide Engstellen der Hülse arbeiten mit Bereichen des Gewindeabschnitts zusammen, insbesondere mit solchen Bereichen, die dem Kopf der Schraube zugekehrt angeordnet sind. So kann die nicht-federnd ausgebildete Engstelle im Bereich des kopfseitigen Gewindeauslaufs des Gewindeabschnitts angreifen. Auch für die federnd-nachgiebige Engstelle kann es vorteilhaft sein, mit einem Bereich des Gewindeabschnitts in Wirkkontakt zu treten, der kopfseitig angeordnet ist. Die nicht-federnd ausgebildete Engstelle der Hülse bildet also letztendlich die Verliersicherung zwischen Hülse und Schraube am Verbindungselement und ist vorzugsweise so ausgebildet sein, dass die normalerweise auftretenden Kräfte und Beanspruchungen nicht dazu führen können, dass die Schraube sich von der Hülse löst, also aus der Hülse heraustritt.

Die zweite Engstelle ist federnd-nachgiebig ausgebildet und besitzt zu diesem Zweck in der Regel mehrere radial federnde Elemente, deren freie Enden mehr oder weniger radial oder auch geneigt in das Außengewinde des Gewindeabschnitts kraft- und/oder formschlüssig eingreifen. Dieser Eingriff kann insbesondere durch die Dimensionierung der Federkraft, mit der die federnden Elemente in die Gewindegänge des Gewindeabschnitts eingreifen, bestimmt werden. Eine weitere Einflussgröße ist in diesem Zusammenhang die Formgebung der freien Enden der federnden Elemente. Diese können scharfkantig, beispielsweise komplementär zu der Formgebung der Gewindegänge des Gewindeabschnitts, aber auch abgerundet ausgebildet werden. Durch eine gerundete Formgebung wird erreicht, dass eine Beschädigung der Gewindegänge des Gewindeabschnitts bei Axialverschiebungen zwischen Schraube und Hülse möglichst gering gehalten wird. Eine scharfkantige Ausbildung der freien Enden der federnden Elemente in Verbindung mit einer großen Federkraft, also einer besonders steifen Ausbildung der federnden Elemente, kann dazu führen bzw. genutzt werden, dass die Schraube in der Endmontage durch eine reine Axialkraft nicht durch die Hülse weiterhin durchgeschoben werden kann, sondern beispielsweise nur durch eine Schraubbewegung an der Schraube aus der Hülse weiter austritt und in die Löcher des zugehörigen anderen Bauteils eintritt. Je nach der Dimensionierung und Abstimmung kann auch ein Mittelweg beschritten werden, bei dem eine begrenzte Axialkraft auf die Schraube in der Endmontage ausreicht, um die Schraube in die Bohrung, insbesondere das Gewindeloch, des zugehörigen anderen Bauteils einzuführen, ohne dass der erste Gewindegang des Gewindelochs im anderen Bauteil durch die aufschlagende Schraube beschädigt würde. Die zweite Engstelle kann mit ihren federnden Elementen rückwärtsgerichtete Widerhaken für das kopfseitige Gewindeende bilden. Die federnden Elemente können auch als elastische Zungen ausgebildet sein.

Das neue Verbindungselement weist an der Hülse axial auf einer Mantellinie oder geneigt durchgehend einen Schlitz oder Spalt auf. Unter einem "Schlitz" wird eine Unterbrechung des Materials der Hülse, in Umfangsrichtung gesehen, verstanden, bei der die beiden voneinander getrennten Enden eines Materialstreifens mehr oder weniger eng, also mit keinem oder keinem nennenswerten Abstand aneinander anliegen. Eine solche Ausbildung erlaubt nur ein radiales Auffedern der Hülse radial nach außen. Unter einem "Spalt" wird eine Materialunterbrechung an der Hülse in der gleichen Richtung verstanden, bei der die beiden getrennten Materialenden einen nennenswerten Abstand voneinander aufweisen. In der Ausbildung mit einem Spalt kann die Hülse bei entsprechender Beanspruchung in radialer Richtung nach innen und nach außen zusammen- bzw. auffedern. Diese Eigenschaft kann bedeutsam sein, um Durchmessertoleranzen in den Durchbrechungen des zu montierenden Bauteils auszugleichen. Wenn es sich z. B. bei dem montierenden Bauteil um eine Haube handelt, kann die Haube insbesondere aus Kunststoff ausgebildet sein, so dass die Löcher neben toleranzmäßigen Durchmesserunterschieden auch noch Entformungsschrägen aufweisen können. All dies und mehr kann durch federnde Eigenschaften der Hülse aufgefangen bzw. ausgeglichen werden.

Gleichgültig, ob die Hülse am Verbindungselement letztendlich einen Schlitz oder einen Spalt aufweist, ist die Herstellung der Hülse für das Verbindungselement vergleichsweise einfach. Die Hülse kann als ebener Blechstreifen geformt, insbesondere gestanzt und geprägt werden, wobei dabei auch die Elemente der beiden Engstellen bereits mit eingeformt werden. Die Formgebung kann unter Verwendung von Gegenlagern in der ebenen Form eines Materialstreifens angebracht werden, so dass letztendlich die Engstellen mit vergleichsweise engen Toleranzen herstellbar sind. Anschließend wird der insoweit vorbereitete Materialstreifen bzw. Materialabschnitt gerollt, also in die Form einer Rohhülse verbracht. Diese Rohhülse kennzeichnet sich dadurch, dass die beiden einander zugekehrten Enden des Materialstreifens noch einen nennenswerten bzw. vergleichsweise größeren Abstand, eben einen größeren Spalt, aufweisen, als es die fertige Hülse an der Schraube und damit am Verbindungselement zeigt. Der insoweit vergrößerte Spalt ist so bemessen, dass sich eine Schraube in den Innenraum der Rohhülse einführen bzw. einschieben lässt, ohne dass die Spitzen der Gewindegänge des Gewindeabschnitts an der Innenwandung der Hülse und insbesondere an den bereits formmäßig fertiggestellten Engstellen anschlagen. Das Einschieben der Schraube in die Rohhülse kann insbesondere so erfolgen, dass die Engstellen der Hülse nicht dem Gewindeabschnitt, sondern dem Schaftabschnitt der Schraube gegenüberliegen. Durch eine nachfolgende Quetschbeanspruchung der Hülse werden die Durchmesser der Hülse verringert, wobei auch die beiden Engstellen jeweils auf kleineren Durchmessern zu liegen kommen. All dies kann geschehen, ohne dass die Engstellen am Schaftabschnitt anschlagen. Bei dieser Quetschverformung wird der vergrößerte Spalt entweder in einen Spalt oder einen Schlitz an der Hülse verformt.

In dieser Stellung deckt die Hülse nur einen Teil des Gewindeabschnitts schützend ab. Die Verbindungselemente können in der Transportstellung zu dem Hersteller des zu montierenden Bauteils verbracht werden. Die dabei auftretenden Beanspruchungen an den Verbindungselementen sind vergleichsweise gering. Es ist aber auch möglich, dass bereits beim Hersteller der Verbindungselemente oder auch erst beim Hersteller der vormontierten Baueinheit die Schraube relativ zu der Hülse axial verschoben wird, wobei der Schaftabschnitt der Schraube aus der Hülse weiter austritt und der Gewindeabschnitt der Schraube ganz oder zumindest zu einem sehr großen Teil in die Hülse eintritt. Dabei gleiten die freien Enden der federnd-nachgiebig ausgebildeten Elemente der zweiten Engstelle über die kopfseitigen Gewindegänge, insbesondere über den kopfseitigen Gewindeauslauf.

Je nach dem, ob die freien Enden der federnden Elemente scharfkantig oder abgerundet ausgebildet sind, tritt eine z. B. in Kauf zu nehmende geringfügige Beschädigung der Gewindegänge ein, die aber an dieser Stelle meist eine untergeordnete Rolle spielt. Bedeutsamer ist dagegen, dass die begrenzte axiale Verschiebbarkeit zwischen Schraube und Hülse in dieser Stellung der beiden Teile des Verbindungselements zueinander entweder erheblich reduziert oder sogar gänzlich beseitigt ist. Theoretisch ist diese axiale Verschiebbarkeit auf die Größe der Steigung des Gewindegangs des Gewindeabschnitts begrenzt.

Bei der Montage des vorzumontierenden Bauteils und bei der Handhabung dieses Bauteils während der Endmontage am anderen zugehörigen Bauteil können auftretende Stöße, Schwingungen und Kräfte nicht dazu führen, dass die Schrauben aus den Hülsen heraustreten oder sich lösen. Die Schraube ist durch die beiden Engstellen und die dabei einwirkenden Reibungskräfte auch gegen ein Verdrehen gehalten, welche jedoch während des Einschraubvorgangs der Schrauben in das andere zugehörige Bauteil überwunden werden können.

Je nach der eingangs beschriebenen Gestaltung und Dimensionierung der Federkraft der federnden Elemente und der formenmäßigen Gestaltung der freien Enden der federnden Elemente, die in das Außengewinde des Gewindeabschnitts eingreifen, lässt sich eine Schraube eines Verbindungselements bei der Endmontage gezielt durch eine entsprechend bemessene Axialkraft relativ zur Hülse in diese hinein und in den Eingang der Bohrung, insbesondere des Gewindelochs, im anderen zugehörigen Bauteil einführen, ohne dass dessen erster Gewindegang beschädigt oder verquetscht wird. Es ist aber auch möglich, die federnden Elemente relativ steif und die freien Enden der federnden Elemente relativ scharfkantig, insbesondere in der Form als Widerhaken, auszubilden, um eine Hineinschiebemöglichkeit der Schraube durch eine rein axiale Kraftbeaufschlagung während der Endmontage zu verhindern und das axiale Heraustreten der Schraube aus der Hülse und das Eintreten in das Gewindeloch im zugehörigen anderen Bauteil ausschließlich durch einen Schraubvorgang an der Schraube, also einen Drehvorgang, zuzulassen. Durch diese Drehbewegung wird die Schraube mit ihrem Gewindeabschnitt einfach aus den federnden Elementen der zweiten Engstelle herausgeschraubt.

Wenn die Hülse eine größere axiale Länge als der Gewindeabschnitt der Schraube aufweist, ergibt sich die Möglichkeit, dass die Hülse den Gewindeabschnitt vollständig schützend abdeckt.

Die die zweite Engstelle bildenden federnden Elemente können axial nahe zu der ersten Engstelle angeordnet sein, so dass beide Engstellen mit dem kopfseitigen Endbereich des Gewindeabschnitts zusammenarbeiten. Besonders vorteilhaft ist es, wenn die erste Engstelle mit dem kopfseitigen Gewindeauslauf des Gewindeabschnitts zusammenarbeitet und die zweite Engstelle mit einem der ersten Gewindegänge nahe dem kopfseitigen Gewindeauslauf zusammenarbeitet, so dass der größte Teil des Gewindeabschnitts mit den beiden Engstellen zu keiner Zeit in Kontakt kommt, also eine Beschädigung des Gewindes ausgeschlossen ist. Die die erste und die zweite Engstelle bildenden Elemente können auf dem Umfang der Hülse einander axial ganz oder teilweise überdeckend abwechselnd angeordnet sein, um die beiden Engstellen axial möglichst nahe aneinanderzurücken.

Wenn zumindest die freien Enden der federnden Elemente der zweiten Engstelle an der Hülse axial entsprechend der Steigung des Gewindes des Gewindeabschnitts verteilt angeordnet sind, besteht die Wahrscheinlichkeit, dass die freien Enden der federnden Elemente der zweiten Engstelle zu mehreren in einen Gewindegang des Gewindeabschnitts eintreten, so dass die verbleibende Relativbeweglichkeit der Schraube relativ zur Hülse auf einen Weg beschränkt ist, der jedenfalls kleiner als die Steigung des Gewindes. Durch eine geringfügige Verdrehbewegung im Anschluss an das axiale Verschieben der Schraube relativ zur Hülse kann sogar eine feste Position der Schraube an der Hülse bei dem montierten Verbindungselement erzielt werden, also die axiale begrenzte Beweglichkeit der Schraube relativ zur Hülse am Verbindungselement völlig beseitigt werden.

Auch für die Ausbildung der ersten Engstelle ergeben sich verschiedene Realisierungsmöglichkeiten. Einige davon sind in den Ausführungsbeispielen dargestellt. Aber auch andere Realisierungsmöglichkeiten im Einzelnen können sinnvoll sein.

Die Elemente der ersten und/oder der zweiten Engstelle können so ausgebildet sein, dass sie zugleich ein von außen erkennbares Merkmal der Hülse darstellen, welches eine automatische Erkennung der Orientierung der Hülse relativ zur Schraube bei der Verbindung zwischen Schraube und Hülse, also bei der Herstellung des Verbindungselements, erbringt. Insbesondere bei einem automatisch durchgeführten Quetschvorgang müssen die Hülsen in zuverlässiger Orientierung den Schrauben zugeführt bzw. beide Teile ineinandergeschoben werden. Es ist aber alternativ und/oder zusätzlich auch weiterhin möglich, ein oder mehrere durchmesserverändernde Merkmale, wie z. B. Einprägungen oder auch Sicken oder Fasen, die sich über den gesamten Umfang oder zumindest wesentliche Teile des Umfangs der Hülse erstrecken, anzubringen, um diese automatische Erkennung der Orientierung der Relativlage der Hülsen zu verbessern.

Die federnden Elemente der zweiten Engstelle an der Hülse können relativ zu der ersten Engstelle der Hülse, der axialen Längen des Gewindeabschnitts und der Hülse und den übrigen relevanten Dimensionen des vormontierten Bauteils und des zugehörigen anderen Bauteils so positioniert sein, dass bei der Endmontage der erste Gewindegang des Gewindeabschnitts erst dann in ein Gewindeloch im anderen zugehörigen Bauteil eingreifen kann, wenn der Gewindeabschnitt zuvor von der zweiten Engstelle freigekommen ist. Dies erlaubt ein leichtes Eintreten des Gewindeabschnitts in das Gewindeloch im anderen zugehörigen Bauteil, wobei dabei auch Herstellungstoleranzen ausgeglichen werden können. Es ist aber auch in manchen Fällen nicht kritisch, wenn diese relativen Dimensionen nicht eingehalten werden und der erste Gewindegang des Gewindeabschnitts bereits dann in das Gewindeloch im anderen zugehörigen Bauteil eintritt, wenn der Gewindeabschnitt noch Kontakt zu der zweiten Engstelle hat. Da die zweite Engstelle ohnehin federnd ausgebildet ist, können auch dabei Toleranzen überbrückt und die Endmontage sicher zu Ende gebracht werden.

Schließlich bezieht sich die Erfindung auch noch auf ein Verfahren zur Herstellung eines Verbindungselements mit einer Schraube und einer daran unverlierbar angeordneten Hülse. Mindestens eine Einprägung wird an einem ebenen Materialstreifen geformt, um später im gerollten Zustand des Materialstreifens eine erste nicht-federnde Engstelle zu erreichen.

Mindestens ein radial federndes Element wird gebildet, um später im gerollten Zustand des Materialstreifens eine zweite Engstelle zu erreichen. Anschließend erfolgt das Rollen des ebenen Materialstreifens zu einer Rohhülse unter Bildung eines vergleichsweise größeren Spaltes. Danach wird die Schraube axial in den Innenraum der Rohhülse eingeschoben. Es erfolgt die Verformung der Rohhülse durch einen radial nach innen wirkenden Quetschvorgang zu der Hülse mit einem Schlitz oder einem Spalt und mit vergleichsweise verringertem Durchmesser, so dass beide Engstellen kleinere Durchmesser als der Außendurchmesser des Gewindes des Gewindeabschnitts der Schraube aufweisen, so dass Schraube und Hülse unverlierbar miteinander verbunden sind.

Damit wird eine besonders preisgünstige Herstellungsmöglichkeit für die Hülse und damit für das Verbindungselement aufgezeigt. Als Schraube kann eine Schraube üblicher Ausbildung eingesetzt werden, die lediglich einen Schaftabschnitt und einen Gewindeabschnitt aufweisen muss. Irgendwelche gesonderten umlaufenden Wulste, wie sie für Spezialschrauben typisch sind, sind nicht erforderlich, weil beide Engstellen mit dem ohnehin vorhandenen Gewindeabschnitt zusammenarbeiten. Die Elemente der beiden Engstellen werden vorteilhaft an einem ebenen Materialstreifen ausgeformt, also an dem Materialstreifen, aus welchem dann nachfolgend die Rohhülse gerollt wird. Dabei kann man am ebenen Materialstreifen vorteilhaft mit Gegenlagern zusammenarbeiten, so dass die Dimensionen der Elemente der beiden Engstellen besonders einfach und toleranzmäßig eng beherrschbar sind. Es versteht sich, dass auch der Quetschvorgang mit der erforderlichen Präzision durchzuführen ist, damit die reduzierten Durchmesser an den beiden Engstellen der Hülse dann entstehen, wenn Schraube und Hülse miteinander unverlierbar verbunden werden.

Ein solcher Quetschvorgang wird vorteilhaft in einer solchen Relativlage zwischen Schraube und Rohhülse durchgeführt, bei der die beiden Engstellen des Schaftabschnitts der Schraube gegenüberliegen. Der Quetschvorgang wird also nicht von den Unsicherheiten eines Kontakts mit dem Gewindeabschnitt der Schraube belastet. Vielmehr wird die Schraube nach Durchführung des Quetschvorgangs in der beschriebenen Relativlage aus der Hülse so weit herausgedrückt, bis ein Anschlagen der ersten Engstelle am Gewindeabschnitt erfolgt. Es versteht sich, dass dabei die federnden Elemente der zweiten Engstelle über einige kopfseitige Gewindegänge des Gewindeabschnitts hinüberschnappen. Es wird dann eine gesicherte Relativlage zwischen Schraube und Hülse erreicht, bei der die Relativbeweglichkeit zwischen Schraube und Hülse auf ein Maß beschränkt ist, welches kleiner ist als die Höhe eines Gewindegangs bzw. der Steigung des Gewindeabschnitts der Schraube. Alternativ ist es natürlich auch möglich, den Quetschvorgang gezielt in einer solchen Relativlage durchzuführen, bei der die Engstellen an der Rohhülse dem Gewindeabschnitt in der vorgesehenen Relativlage gegenüberliegen. Dabei muss jedoch darauf geachtet werden, dass der Quetschvorgang nicht zu einer Verformung der Gewindegänge des Gewindeabschnitts führt.

Die begrenzte axiale Beweglichkeit der Schraube kann relativ zu der Hülse kann zumindest in der Transport- und Handhabungsstellung der vormontierten Baueinheit vor der Endmontage wesentlich reduziert sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste beispielhafte Ausführungsform des neuen Verbindungselements.
- **Fig. 2**: zeigt eine zweite beispielhafte Ausführungsform des neuen Verbindungselements in perspektivischer Darstellung.
- **Fig. 3**: zeigt eine dritte beispielhafte Ausführungsform des neuen Verbindungselements.
- **Fig. 4**: zeigt eine vierte beispielhafte Ausführungsform des neuen Verbindungselements.
- **Fig. 5**: zeigt eine Schnittdarstellung des neuen Verbindungselements und der zugehörigen Teile während der Endmontage vor Beginn eines Schraubvorgangs.
- **Fig. 6**: zeigt eine Schnittdarstellung des neuen Verbindungselements und der zugehörigen Teile während der Endmontage nach Beginn eines Schraubvorgangs.
- **Fig. 7**: zeigt eine ähnliche Schnittdarstellung einer fünften beispielhaften Ausführungsform des neuen Verbindungselements während der Endmontage nach Beginn des Schraubvorgangs.
- **Fig. 8**: zeigt eine sechste beispielhafte Ausführungsform des neuen Verbindungselements.

### FIGURENBESCHREIBUNG

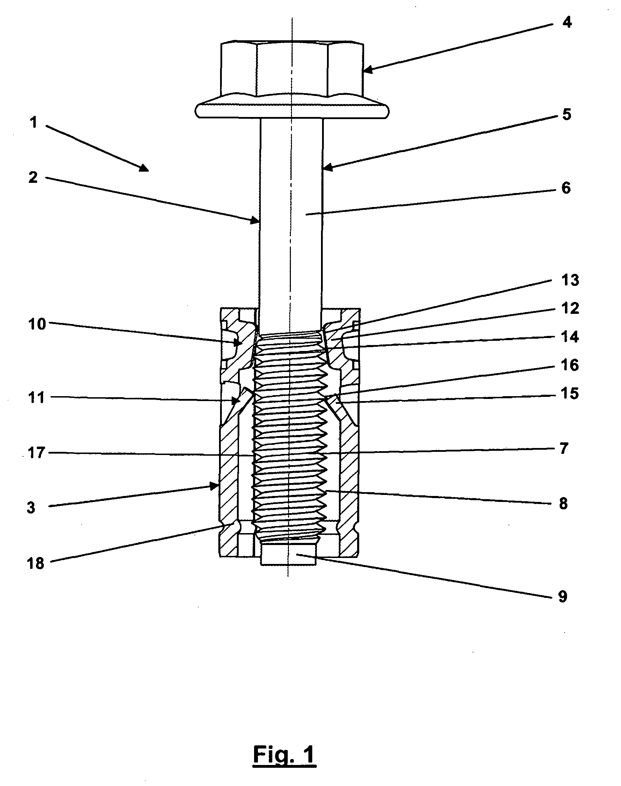

In **Fig. 1** zeigt eine erste beispielhafte Ausführungsform eines neuen Verbindungselements 1 dargestellt, welches eine Schraube 2 und eine Hülse 3 aufweist. Die Schraube 2 weist einen Kopf 4 und einen Schaft 5 auf. Die Schraube 2 ist herkömmlich ausgebildet. Der Kopf 4 weist eine Schlüsselangriffsfläche und eine Kopfauflagefläche auf. Der Schaft 5 setzt sich aus einem zylindrischen Schaftabschnitt 6 und einem Gewindeabschnitt 7 zusammen, wobei der Außendurchmesser des Schaftabschnitts 6 geringer ausgebildet ist als der Außendurchmesser des Gewindeabschnitts 7 mit seinem Gewinde 8, hier einem metrischen Gewinde. Der Schaft 5 kann in einem Zentrieransatz 9 enden. Es ist erkennbar, dass der Schaftabschnitt 6 dem Kopf 4 zugekehrt an der Schraube 1 angeordnet ist, während der Gewindeabschnitt 7 dem Kopf 4 abgekehrt angeordnet ist.

Die Hülse 3 ist im Wesentlichen kreisringförmig ausgebildet. Sie ist vorzugsweise aus einem ebenen Blechabschnitt geformt, aus dem dann die Hülse 3 durch Rollen geformt wird. Genauer gesagt entsteht nach dem Rollen des Blechstreifens eine Rohhülse mit einem Innendurchmesser, der noch größer ist als der Außendurchmesser des Gewindes 8, so dass bei der Herstellung des Verbindungselements 1 die Schraube 2 in die Hülse 3 eingeführt werden kann. Anschließend erfolgt ein Quetschvorgang in radialer Richtung, unter dem sich der Innendurchmesser der Hülse 3 verkleinert. Dies kann im Bereich des Schaftabschnitts 6 geschehen, ist aber auch in der Relativlage möglich, die Fig. 1 zeigt. Auf beiden Wegen entsteht ein Verbindungselement 1, bei dem Schraube 2 und Hülse 3 unverlierbar miteinander verbunden sind.

Die Hülse 3 ist in besonderer Weise ausgebildet. Die Hülse 3 weist eine erste Engstelle 10 und eine zweite Engstelle 11 auf. Die erste Engstelle 10 weist mehrere über den Umfang der Hülse 3 verteilt angeordnete Einprägungen 12 auf, die radial nach innen vorstehende Vorsprünge bilden. Es können beispielsweise drei oder vier Einprägungen 12 auf dem Umfang gleichmäßig verteilt vorgesehen sein. Die Einprägungen 12 können auf ihrer nach innen vorspringenden Seite Flächenelemente 13 bilden, die sich zu einer kegelförmigen Umhüllung des kopfseitigen Gewindeauslaufs 14 des Gewindeabschnitts 7 ergänzen, wie dies in der DE 102 15 883 A1 im Einzelnen beschrieben ist. Die Einprägungen 12 arbeiten als feste Anschlagspaarung mit dem Gewindeauslauf 14 zusammen, also jedenfalls dem Gewindeabschnitt 7, der ohnehin an der Schraube 2 vorgesehen ist. Die Dimensionierung ist so getroffen, dass in der fertig montierten Stellung des Verbindungselements 1 gemäß Fig. 1 die Schraube 2 durch normalerweise auftretende Kräfte nicht weiter aus der Hülse 3 herausgezogen oder herausgedrückt werden kann. Die erste Engstelle 10 bildet damit einen festen, unüberwindlichen Anschlag.

Die zweite Engstelle 11 ist federnd-nachgiebig ausgebildet und weist eine Reihe von federnden Elementen 15 auf, die ebenfalls über den Umfang der Hülse 3 verteilt angeordnet sind. Die federnden Elemente 15 können zungenartig aus dem Material der Hülse 3 angeschnitten bzw. ausgeformt sein. Ihre freien Enden 16 sind hier scharfkantig bzw. widerhakenartig ausgebildet und greifen so kraft- und/oder formschlüssig in das Gewinde 8 des Gewindeabschnitts 7 ein. Auch die federnden Elemente 15 arbeiten somit mit dem Gewindeabschnitt 7 zusammen, so dass zur Ausbildung der jeweiligen Gegenelemente an der Schraube 2 der ohnehin vorhandene Gewindeabschnitt 7 herangezogen wird, also eine Spezialausbildung oder -ausrüstung der Schraube 2 nicht erforderlich ist.

Es versteht sich, dass die Ausbildung der Elemente für die erste Engstelle 10 und für die zweite Engstelle 11 vorteilhaft durch Stanz- bzw. Drückvorgänge am noch ebenen Blechstreifen realisiert werden können, also in einer Stellung, in der mit Gegenlagern gearbeitet werden kann, so dass die Anordnung und Dimensionierung der Elemente für die erste und zweite Engstelle 10, 11 in engen Toleranzen einhaltbar ist.

Das Wickeln der Rohhülse aus dem ebenen Blechstreifen geschieht dann so, dass zwischen den einander zugekehrten Enden des Blechstreifens ein Spalt entsteht und die inneren Enden der Einprägungen 12 und der federnden Elemente 15 auf Durchmessern liegen, die größer als der Außendurchmesser des Gewindes 8 des Gewindeabschnitts 7 bemessen sind. In dieser Stellung werden also Schraube 2 und Hülse 3 ineinandergeschoben und einem Quetschvorgang ausgesetzt, wobei der Spalt an der Hülse 3 zu einem Schlitz 17 zusammengedrückt werden kann. Dabei werden gleichzeitig die Einprägungen 12 und die federnden Elemente 15 auf Durchmesser gebracht, die den Außendurchmesser des Gewindes 8 des Gewindeabschnitts 7 unterschreiten. Wenn der Quetschvorgang unter Relativlage der Rohhülse gegenüber dem Schaftabschnitt 6 geschieht, ist es anschließend möglich, die Schraube 2 aus der Hülse 3 teilweise herauszudrücken, bis die Einprägungen 12 der ersten Engstelle 10 an dem Gewindeauslauf 14 zur Anlage kommen. Die freien Enden 16 der federnden Elemente 15 der zweiten Engstelle 11 federn dabei jeweils auf und ratschen über die Spitzen der Gewindegänge hinüber, bis letztlich die in Fig. 1 dargestellte Relativlage erreicht wird. Die in Fig. 1 gezeigte Stellung kann als Transportstellung des Verbindungselements 1 genutzt werden. Es ist erkennbar, dass sowohl die Engstelle 10 wie auch die Engstelle 11 relativ weit oben, also am kopfseitigen Ende der Hülse 3 angeordnet sind, damit einerseits die Hülse 3 den gesamten Gewindeabschnitt 7 schützend umgibt und damit das Gewinde 8 während des Transports geschützt ist. Andererseits ergeben sich weitere Vorteile, die in Verbindung mit weiteren Zeichnungen erläutert sind. Das Herausdrücken der Schraube 2 aus der Hülse 3 nach der Herstellung des Verbindungselements 1 kann aber auch erst beim Weiterverarbeiter der Verbindungselemente 1 geschehen.

Die Hülse 3 kann hinsichtlich der Ausbildung der ersten Engstelle 10 und/oder der zweiten Engstelle 11 so getroffen sein, dass die Formgebung dieser Elemente zugleich ein Merkmal der Hülse 3 darstellt, welches eine automatische Erkennung der Orientierung der Hülse 3 in einer automatisch arbeitenden Montagemaschine zur unverlierbaren Verbindung zwischen Schraube 2 und Hülse 3 ermöglicht. Andererseits ist es auch möglich, die Hülse 3 mit einer insbesondere nach innen vorspringenden Wulst 18 auszustatten, so dass dieses Merkmal zur automatischen Erkennung der Orientierung der Hülse 3 herangezogen werden kann. Es versteht sich, dass der Innendurchmesser der Wulst 18 immer noch erheblich größer als der Außendurchmesser des Gewindes 8 gestaltet ist, so dass die Wulst 18 das ordnungsgemäße Zusammenarbeiten der Engstellen 10 und 11 nicht beeinträchtigt.

Die Länge der Hülse 3 ist vorzugsweise größer als die Länge des Gewindeabschnitts 7 ausgebildet sein. Fig. 1 lässt erkennen, dass ein Teil des Zentrieransatzes 9 aus der Hülse 3 herausragt. Die Längenausbildung kann aber auch so getroffen sein, dass dies gerade nicht der Fall ist.

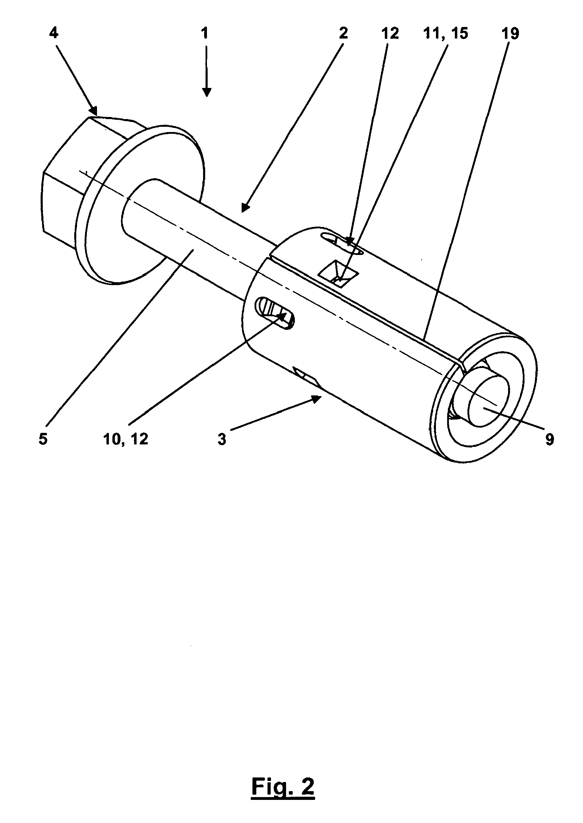

**Fig. 2** zeigt eine zweite beispielhafte Ausführungsform des Verbindungselements 1 mit der Schraube 2 und der Hülse 3. Auch hier ist die montierte Stellung dargestellt. Im Gegensatz zu der Ausführungsform gemäß Fig. 1 sind die die erste Engstelle 10 bildenden Einprägungen 12 und die die zweite Engstelle 11 bildenden federnden Elemente 15 nicht axial gegeneinander versetzt, wie in Fig. 1, sondern unter gegenseitiger axialer Überdeckung angeordnet. Dies bedeutet, dass die beiden Engstellen 10 und 11 noch weiter nach dem kopfseitigen Ende der Hülse 3 versetzt angeordnet sind. Diese Maßnahme zielt darauf ab, insbesondere bei scharfkantiger Ausbildung der freien Enden 16 der federnden Elemente 15, eine etwaige Beschädigung der Spitzen des Gewindes 8 beim teilweisen Verschieben zwischen Schraube 2 und Hülse 3 auf einen kopfseitigen Endbereich des Gewindeabschnitts 7, insbesondere auf den Gewindeauslauf 14, zu beschränken, so dass sich eine solche "Beschädigung" nicht nachteilig auf das Tragverhalten der Schraube 2 nach der Endmontage auswirken kann. Es versteht sich, dass auch durch andere Maßnahmen, beispielsweise durch die Formgebung der freien Enden 16, die Bemessung der axialen Länge der federnden Elemente 15, die gewählten Durchmesser und die ausgewählte Federkraft hierauf Einfluss genommen werden kann, so dass insgesamt ein beanspruchungsgerechtes Verbindungselement 1 entsteht.

Fig. 2 lässt auch im Gegensatz zu der Ausführungsform gemäß Fig. 1 erkennen, dass die Anordnung und Ausbildung der ersten Engstelle 10 und der zweiten Engstelle 11 auf das radiale Zusammenpressen der Hülse 3 zwecks unverlierbarer Verbindung mit der Schraube 2 so angepasst sind, dass anstelle des Schlitzes 17 ein Spalt 19 entsteht. Ein solcher Spalt 19 lässt ein radiales Federn der Hülse 3 in beiden Richtungen zu.

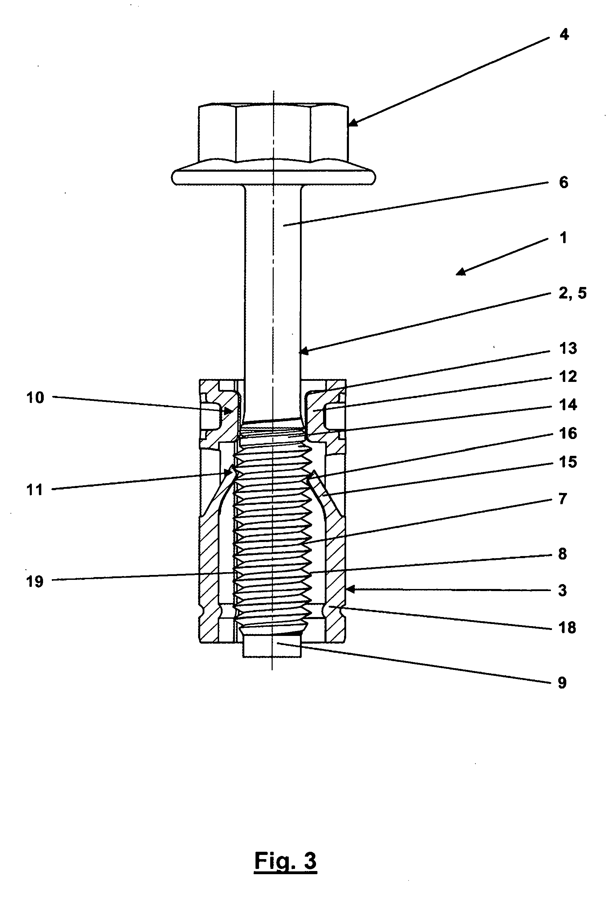

Die in **Fig. 3** dargestellte beispielhafte Ausführungsform des Verbindungselements 1 baut auf der Ausführungsform gemäß Fig. 1 auf. Abweichend dazu ist der wesentliche Durchmesser des Schaftabschnitts 6 vergleichsweise geringer ausgebildet, d. h. der Schaftabschnitt 6 ist eingezogen geformt. Auch die Ausbildung der beiden Engstellen 10 und 11 ist etwas abgeändert. Die Flächenelemente 13 der Einprägungen 12 verlaufen unter einem wesentlichen kleineren Hüllwinkel oder sind sogar axial ausgerichtet ausgebildet. In Abstimmung hierzu ist der Gewindeauslauf 14 oder ein Teil desselben durch einen Rollvorgang im Durchmesser verringert, so dass ein sprunghafter Übergang zu dem übrigen Gewinde 8 des Gewindeabschnitts 7 entsteht. Auch damit wird eine Anschlagpaarung an der Engstelle 10 geschaffen, die durch normalerweise auftretende Kräfte nicht überwunden werden kann.

Auch die federnden Elemente 15 oder Zungen, die die zweite Engstelle 11 bilden, sind hier vergleichsweise länger gestaltet, um ein erleichtertes Einfedern nach innen, also eine geringere Federkraft zu realisieren. Zudem sind die freien Enden 16 nicht scharfkantig oder widerhakenartig, sondern abgerundet ausgebildet, um ein leichteres beschädigungsfreies Übergleiten über die Spitzen der Gewindegänge beim teilweisen Herausschieben der Schraube 2 aus der Hülse 3 zu ermöglichen. Es versteht sich, dass diese Ausführungsform auch geeignet ist, einen Einschraubvorgang der Schrauben 2 während der Endmontage durch einen zunächst rein axialen Hub zwecks Einführung des Zentrieransatzes 9 in die Gewindelöcher des Unterteils zu ermöglichen und dann gezielt den Einschraubvorgang anzuschließen. Fig. 3 lässt auch erkennen, dass nach der Verformung der Rohhülse zu der Hülse 3 ein Spalt 19 entsteht, der einem sinnvollen Toleranzausgleich gilt.

Es genügt z. B. bei dieser Ausführungsform, die Anstellkraft der federnden Elemente 15 so zu dimensionieren, dass diese eine hinreichende Reibung zur Verfügung stellen, die einem Verdrehen der Schraube 2 entgegenwirken. Dies bedeutet, dass während des Transports auftretende Kräfte nicht zu einer Verdrehung zwischen Schraube 2 und Hülse 3 führen können, so dass der gesamte Gewindeabschnitt 7 durch die Hülse 3 dauerhaft geschützt ist, sofern dies gewünscht ist. Die Reduzierung des Durchmessers des Schaftabschnitts 6 erbringt vorteilhaft ein erhöhtes Radialspiel, welches beim Einschrauben der Schrauben 2 in der Endmontage genutzt werden kann.

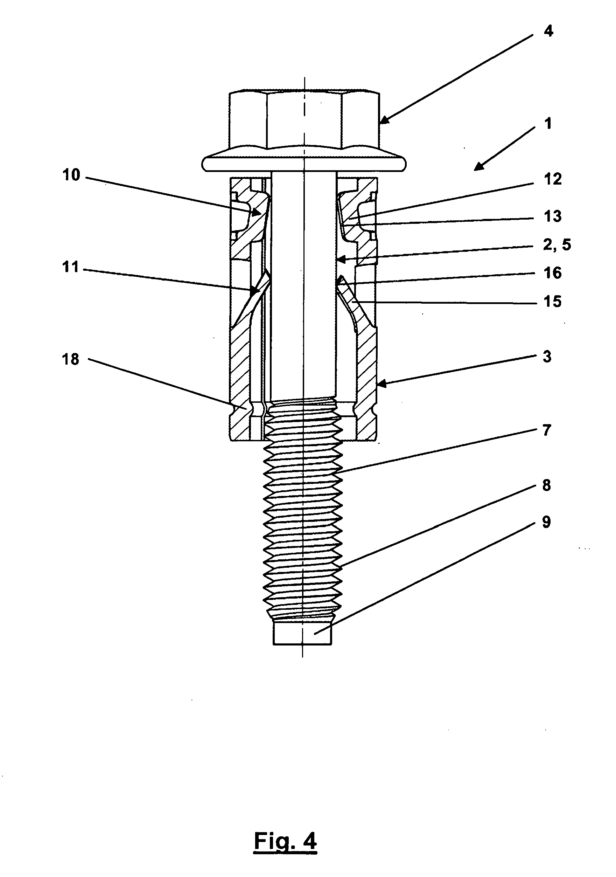

**Fig. 4** zeigt eine weitere beispielhafte Ausführungsform des Verbindungselements 1, bei der die erste Engstelle 10 so ausgebildet ist, wie dies die Fig. 1 zeigt, während die zweite Engstelle 11 in Übereinstimmung mit der Ausbildung der Fig. 3 ausgebildet ist. In all diesen Ausführungsformen sind die federnden Elemente 15 mit ihren freien Enden 16 so ausgebildet und angeordnet, dass die freien Enden 16 steigungsbehaftet enden, so dass sie mehr oder weniger gleichzeitig über den Umfang gesehen in die Vertiefung des Gewindes 8 des Gewindeabschnitts 7 eintreten können. Diese Ausbildung und Anpassung kann sogar dazu genutzt werden, um anschließend an eine Axialbewegung der Schraube 2 gegenüber der Hülse 3 bei der Montage des Verbindungselements 1 noch eine geringfügige Relativverdrehung zwischen Schraube 2 und Hülse 3 herbeizuführen, um die begrenzte axiale Beweglichkeit gänzlich zu beseitigen und die Schraube 2 und die Hülse 3 fest bzw. zu einem festen Verbindungselement 1 zusammenzufügen. Gleichwohl empfiehlt es sich, die Radialverpressung der Rohhülse zu der Hülse 3 in einer Relativlage durchzuführen, wie dies Fig. 4 zeigt. Die endgültige Relativpositionierung zwischen Schraube 2 und Hülse 3 erfolgt dann entweder beim Hersteller des Verbindungselements 1 oder bei dem Hersteller der vormontierten Baueinheit.

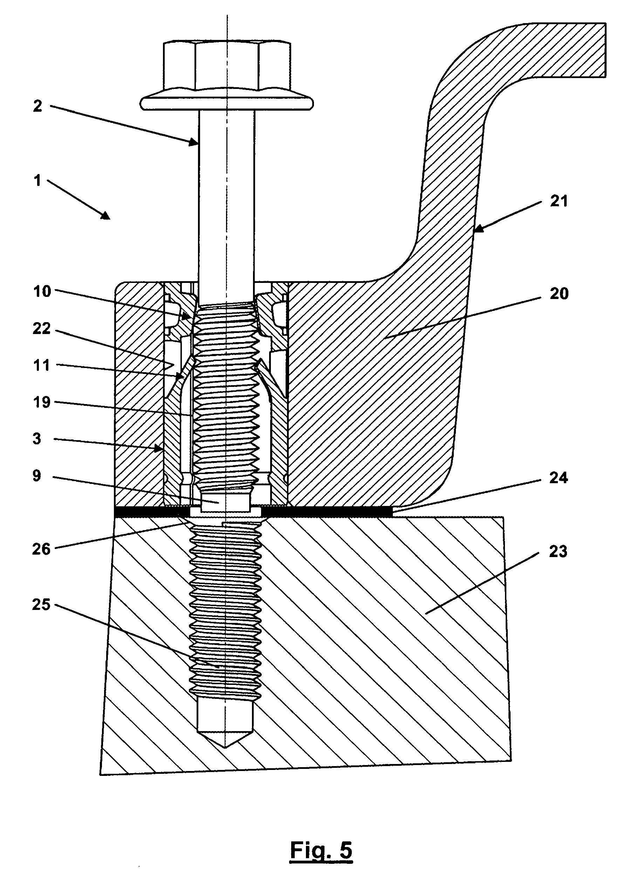

**Fig. 5** zeigt in seinem oberen Bereich ein Bauteil 20, welches zwecks Herstellung einer vormontierten Baueinheit 21 mit mehreren Verbindungselementen 1 versehen wird. Hierzu werden jeweils die Hülsen 3 der Verbindungselemente 1 mit den darin unverlierbar gehaltenen Schrauben 2 in Bohrungen 22 eingepresst, wobei sinnvoll das Federungsvermögen der Hülse 3 zur Überbrückung von Toleranzen ausgenutzt werden kann. Dies gilt insbesondere dann, wenn das Bauteil 20 aus Kunststoff besteht und die Bohrungen 22 Entformungsschrägen aufweisen. Vom Hersteller der vormontierten Baueinheit 21 gelangen diese dann z. B. zum Automobilbauer, bei dem die vormontierte Baueinheit 21 mit einem anderen Bauteil 23, beispielsweise einem Unterteil, unter Zwischenfügung einer Dichtung 24 dauerhaft verbunden wird. Aus Fig. 5 ist erkennbar, dass auch in dieser Stellung der Gewindeabschnitt 7 geschützt untergebracht sein kann und eine Beschädigung durch eine Relativverschiebung der vormontierten Baueinheit 21 relativ zum anderen Bauteil 23 im Bereich der Trennebene nicht auftreten kann. Das andere Bauteil 23 ist in entsprechender Abstimmung mit Gewindelöchern 25 versehen, die an ihrem der Dichtung 24 zugekehrten Ende zweckmäßig mit einer Fase 26 versehen sind.

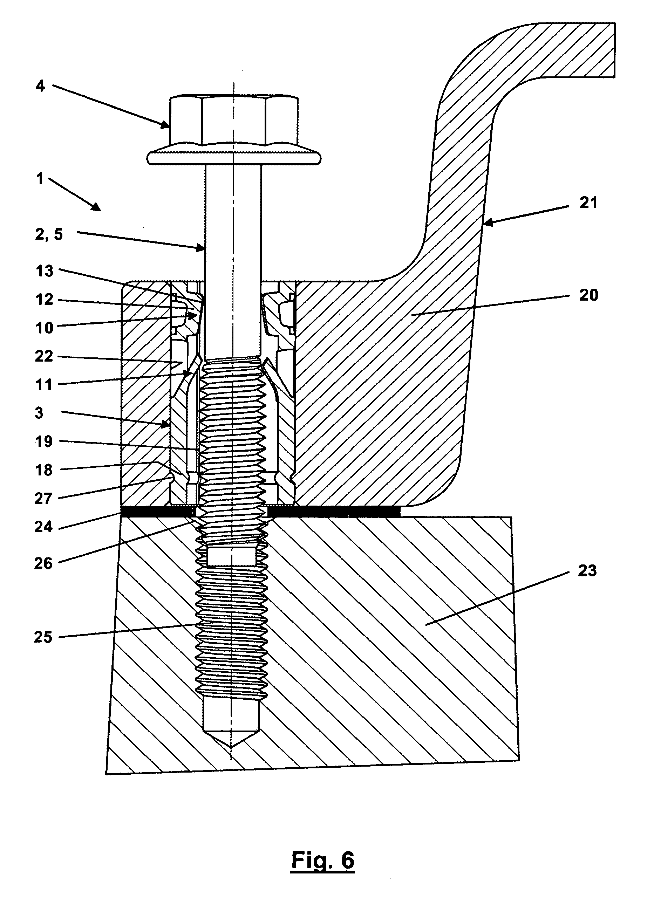

Die weitere Endmontage ist durch Vergleich der **Fig. 5** **und** **6** erkennbar. Der Übergang aus Fig. 5 kann so ablaufen, dass zunächst die Schraube 2 jedes Verbindungselements 1 durch einen rein axial verlaufenden Einschubvorgang weiter niedergedrückt wird, wobei der Zentrieransatz 9 in das Gewindeloch 25 eintritt, ohne dass sich die Gewindegänge des Gewindeabschnitts 7 mit den Gewindegängen in den Gewindelöchern 25 kontaktieren. Dies ist deshalb möglich, weil die abgerundeten freien Enden 16 der federnden Elemente 15 eine solche Axialverschiebung zulassen. Es versteht sich, dass bei Ausbildung der freien Enden 16 als scharfkantige Widerhaken, wie in Fig. 1 dargestellt, eine solche rein axiale Bewegung nicht möglich ist, sondern das axiale Niedertreten der Schraube 2 nur durch einen Schraubvorgang, also ein Herausschrauben der Schraube 2 aus der Hülse 3 nach unten unter Eintritt in den Gewindegang des Gewindelochs 25 erzielt werden kann.

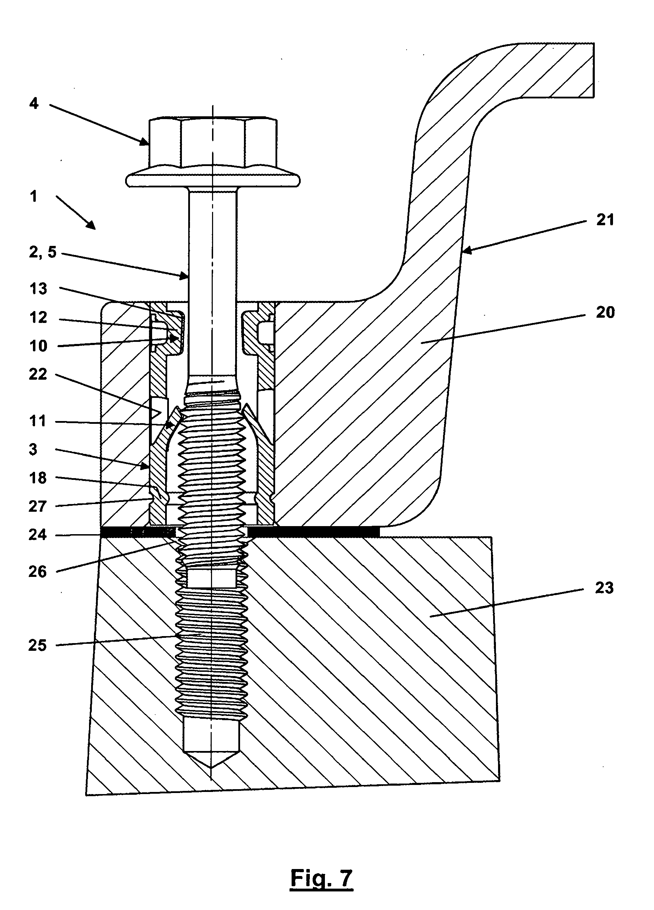

**Fig. 6** lässt auch erkennen, dass die nach innen vorspringende Wulst 18 auf der Außenseite der Hülse 3 eine umlaufende Nut bildend, nicht nur zur Erkennung der Orientierung bei der Herstellung des Verbindungselements 1 genutzt werden kann, sondern das Durchgangsloch 22 in axialer Zuordnung zu der umlaufenden Nut der Wulst 18 einen umlaufenden Vorsprung 27 aufweist, so dass damit die axiale Lage der Hülse 3 und des Verbindungselements 1 im Bauteil 20 bestimmt wird. In Verbindung mit der Darstellung und Anordnung der beiden Engstellen 10 und 11 zueinander gemäß Fig. 2 und der Darstellung der Fig. 5 und 6 ist erkennbar, dass die Ausbildung und Abstimmung aufeinander so getroffen werden kann, dass die Reihenfolge des Freikommens des Gewindeabschnitts 7 von der zweiten Engstelle 11 während der Endmontage festgelegt werden kann. So kann die Ausbildung und Abstimmung z. B. so getroffen sein, dass der Gewindeabschnitt 7 von der zweiten Engstelle 11 freikommt, bevor der erste Gewindegang des Gewindes 8 Kontakt zu dem Gewinde im Gewindeloch 25 des anderen Bauteils 23 bekommen hat. Wenn die federnden Elemente 15 mit abgerundeten freien Enden 16 ausgestattet sind, kann auch eine Überschneidung des Austretens des Gewindeabschnitts 7 aus der zweiten Engstelle 11 und ein Eintreten in den Gewindegang des Gewindelochs 25 in Überlappung realisiert werden. Es kann durchaus sinnvoll sein, diese Überlappung durchzuführen, wie dies aus **Fig. 7** erkennbar wird, wobei Fig. 7 eine Ausbildung des Verbindungselements 1 aufgreift, wie dies in Fig. 3 dargestellt ist. Für andere Ausführungsformen des Verbindungselements 1 gilt Entsprechendes.

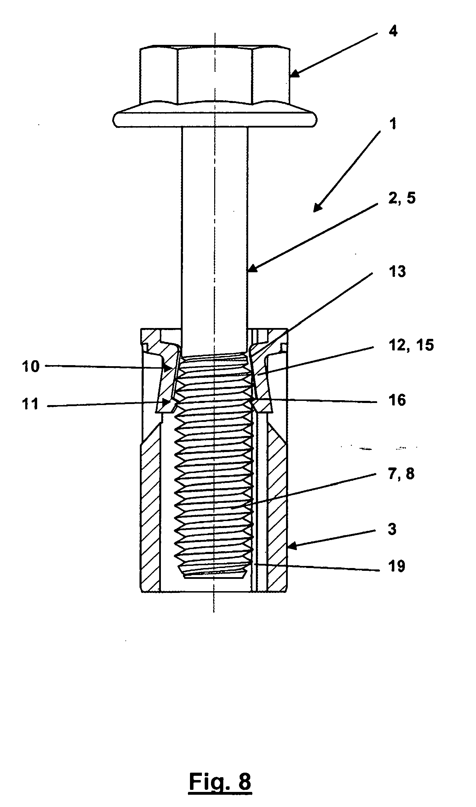

**Fig. 8** zeigt schließlich eine weitere Ausführungsform des Verbindungselements 1 mit einer Schraube 2 gemäß Fig. 1, wobei lediglich die Hülse 3 abgewandelt ausgeführt ist. Elemente der beiden Engstellen 10 und 11 sind hier an Elementen zusammengefasst. Die Einprägungen 12 sind hier gleichzeitig auch als federnde Elemente 15 ausgebildet, wobei sie mit Ihrem einen Endbereich in einem nicht federnden Bereich die Flächenelemente 13 bilden und mit Ihrem anderen freien Endbereich die freien Enden 16 der federnden Elemente 15 darstellen. Es versteht sich, dass die Abstimmung aufeinander entsprechend sorgfältig dimensioniert und ausgebildet sein muss. Die Ausführungsform der Fig. 8 lässt auch erkennen, dass die freien Enden 16 nicht steigungsbehaftet angeordnet sind, also in axialer Richtung auf einer gemeinsamen Umfangslinie bzw. -ebene liegen. Die freien Enden 16 der federnden Elemente 15 können in der dargestellten Weise mit unterschiedlich wirkenden Schrägflächen versehen sein, so dass ein Überschnappen über die Spitzen der Gewindegänge des Gewindes 8 nur in der einen Richtung möglich ist.

### BEZUGSZEICHENLISTE

- 1: Verbindungselement
- 2: Schraube
- 3: Hülse
- 4: Kopf
- 5: Schaft
- 6: Schaftabschnitt
- 7: Gewindeabschnitt
- 8: Gewinde
- 9: Zentrieransatz
- 10: Engstelle
- 11: Engstelle
- 12: Einprägung
- 13: Flächenelement
- 14: Gewindeauslauf
- 15: federnde Elemente
- 16: freies Ende
- 17: Schlitz
- 18: Wulst
- 19: Spalt
- 20: Bauteil
- 21: vormontierte Baueinheit
- 22: Bohrung
- 23: Bauteil
- 24: Dichtung
- 25: Gewindeloch
- 26: Fase
- 27: Vorsprung

## Patentansprüche

1. Verbindungselement (1), mit
einer Schraube (2),
wobei die Schraube (2) einen Kopf (4), einen Schaftabschnitt (6) und einen Gewindeabschnitt (7) mit einem Gewinde (8) aufweist,
wobei der Schaftabschnitt (6) dem Kopf (4) zugekehrt und der Gewindeabschnitt (7) von dem Kopf (4) abgekehrt angeordnet ist,
wobei der Schaftabschnitt (6) einen Durchmesser besitzt, der kleiner als der Außendurchmesser des Gewindes (8) ist; und
einer Hülse (3),
wobei die Hülse (3) eine erste Engstelle (10) mit einem Durchmesser besitzt, der kleiner als der Außendurchmesser des Gewindes (8) ist, **dadurch gekennzeichnet, dass**
die Hülse (3) eine zweite Engstelle (11) aufweist, die mindestens ein federndes Element (15) besitzt, das in das Gewinde (8) eingreift, und
die Hülse (3) axial durchgehend einen Schlitz (17) oder Spalt (19) aufweist.

2. Verbindungselement (1) nach Anspruch 1, **dadurch gekennzeichnet, dass** die Hülse (3) eine größere axiale Länge als der Gewindeabschnitt (7) der Schraube (2) aufweist.

3. Verbindungselement (1) nach Anspruch 1 oder 2, **dadurch gekennzeichnet, dass** das mindestens eine federnde Element (15) derart axial nahe zu der ersten Engstelle (10) angeordnet ist, dass beide Engstellen (10, 11) mit dem kopfseitigen Endbereich des Gewindeabschnitts (7) zusammenarbeiten.

4. Verbindungselement (1) nach mindestens einem der Ansprüche 1 bis 3, **dadurch gekennzeichnet, dass** eine Mehrzahl von federnden Elementen (15) vorhanden ist, die jeweils ein freies Ende (16) aufweisen, wobei die freien Enden (16) an der Hülse (3) axial entsprechend der Steigung des Gewindes (8) verteilt angeordnet sind.

5. Verbindungselement (1) nach mindestens einem der Ansprüche 1 bis 4, **dadurch gekennzeichnet, dass** das mindestens eine federnde Element (15) ein scharfkantig ausgebildetes freies Ende (16) aufweist.

6. Verbindungselement (1) nach mindestens einem der Ansprüche 1 bis 4, **dadurch gekennzeichnet, dass** das mindestens eine federnde Element (15) ein abgerundet ausgebildetes freies Ende (16) aufweist.

7. Verbindungselement (1) nach mindestens einem der Ansprüche 1 bis 6, **dadurch gekennzeichnet, dass** die erste und/oder die zweite Engstelle (10, 11) so ausgebildet sind, dass sie zugleich ein Merkmal der Hülse (3) darstellen, welches eine automatische Erkennung der Orientierung der Hülse (3) ermöglicht.

8. Verbindungselement (1) nach mindestens einem der Ansprüche 1 bis 7, **dadurch gekennzeichnet, dass** das mindestens eine federnde Element (15) der zweiten Engstelle (11) relativ zu der ersten Engstelle (10), der axialen Längen des Gewindeabschnitts (7) und der Hülse (3) und den übrigen Dimensionen eines Bauteils (20) einer vormontierten Baueinheit (21) und eines zugehörigen anderen Bauteils (23) derart positioniert ist, dass bei der Endmontage der erste Gewindegang des Gewindeabschnitts (7) erst dann in ein Gewindeloch (25) im zugehörigen anderen Bauteil (23) eingreifen kann, wenn der Gewindeabschnitt (7) zuvor von der zweiten Engstelle (11) freigekommen ist.

9. Verbindungselement (1) nach mindestens einem der Ansprüche 1 bis 8, **dadurch gekennzeichnet, dass**
die Hülse (3) unverlierbar an der Schraube (2) angeordnet ist, und/oder
die erste Engstelle (10) mit dem dem Kopf (4) zugekehrten Endbereich des Gewindeabschnitts (7) eine nicht-federnde Hinterschneidung bildet, und/oder
das mindestens eine federnde Element (15) kraft- und/oder formschlüssig in das Gewinde (8) des Gewindeabschnitts (7) eingreift, und/oder
das federnde Element (15) ein radial federndes Element (15) ist.

10. Vormontierte Baueinheit (21), mit
einem Bauteil (20) mit einer Bohrung (22), und
einem Verbindungselement (1) nach mindestens einem der Ansprüche 1 bis 9, wobei das Verbindungselement (1) in die Bohrung (22) des Bauteils (20) eingepresst ist.

11. Verfahren zur Herstellung eines Verbindungselements (1) mit einer Schraube (2) und einer daran unverlierbar angeordneten Hülse (3), insbesondere eines Verbindungselements (1) nach mindestens einem der Ansprüche 1 bis 9, mit den Schritten:
Bildung mindestens einer Einprägung (12) an einem ebenen Materialstreifen zur späteren Ausbildung einer ersten nicht-federnden Engstelle (10) im gerollten Zustand des Materialstreifens;
Bildung mindestens eines federnden Elements (15) zur späteren Ausbildung einer zweiten Engstelle (11) im gerollten Zustand des Materialstreifens;
Rollen des ebenen Materialstreifens zu einer Rohhülse unter Bildung eines Spalts mit einer ersten Breite;
Einschieben der Schraube (2) axial in den Innenraum der Rohhülse;
Verformung der Rohhülse durch einen radial nach innen wirkenden Quetschvorgang zu der Hülse (3) mit einem Schlitz (17) oder einem Spalt (19) mit einer kleineren zweiten Breite, so dass beide Engstellen (10, 11) kleinere Durchmesser als der Außendurchmesser des Gewindes (8) des Gewindeabschnitts (7) der Schraube (2) aufweisen, so dass die Schraube (2) und die Hülse (3) unverlierbar miteinander verbunden sind.

12. Verfahren nach Anspruch 11, **dadurch gekennzeichnet, dass**
der Quetschvorgang in einer Relativlage zwischen der Schraube (2) und der Rohhülse erfolgt, bei der die beiden Engstellen (10, 11) dem Schaftabschnitt (6) der Schraube (2) gegenüberliegen, und/oder
die Schraube (2) aus der Hülse (3) bis zu einem Anschlagen der ersten Engstelle (10) an dem Gewindeabschnitt (7) herausgedrückt wird.

## Claims

1. A fastener (1), comprising:
a screw (2),
the screw (2) including a head (4), a shank portion (6) and a threaded portion (7) with a thread (8),
the shank portion (6) being arranged to face the head (4) and the threaded portion (7) being arranged to face away from the head (4),
the shank portion (6) having a diameter being smaller than the outer diameter of the thread (8); and
a bushing (3),
the bushing (3) having a narrow (10) having a diameter being smaller than the outer diameter of the thread (8), **characterised in that**
the bushing (3) includes a second narrow (11) including at least one resilient element (15) engaging into the thread (8), and
the bushing (3) including a slot (17) or a gap (19) continuously extending in an axial direction.

2. The fastener (1) of claim 1, **characterised in that** the bushing (3) has a greater axial length than the threaded portion (7) of the screw (2).

3. The fastener (1) of claim 1 or 2, **characterised in that** the at least one resilient element (15) is arranged that close to the first narrow (10) in an axial direction such that both narrows (10, 11) cooperate with the end portion of the threaded portion (7) facing the head (4).

4. The fastener (1) of at least one of claims 1 to 3, **characterised in that** there is a plurality of resilient elements (15) each including a free end (16), the free ends (16) being arranged at the bushing (3) in an axially distributed manner corresponding to the pitch of the thread (8).

5. The fastener (1) of at least one of claims 1 to 4, **characterised in that** the at least one resilient element (15) includes a free end (16) being designed to be sharp-edged.

6. The fastener (1) of at least one of claims 1 to 4, **characterised in that** the at least one resilient element (15) includes a free end (16) being designed to be rounded.

7. The fastener (1) of at least one of claims 1 to 6, **characterised in that** the first and/or the second narrow (10, 11) is designed in a way that it also forms a feature of the bushing (3) allowing for automatic determination of an orientation of the bushing (3).

8. The fastener (1) of at least one of claims 1 to 7, **characterised in that** the at least one resilient element (15) of the second narrow (11) is positioned with respect to the first narrow (10), the axial lengths of the threaded portion (7) and of the bushing (3) and the remaining dimensions of a component (20) of a pre-assembled unit (21) and of a corresponding other component (23) such that, during final assembly, the first thread of the threaded portion (7) can only then engage into a threaded bore (25) in the corresponding other component (23) when the threaded portion (7) has been previously released from the second narrow (11).

9. The fastener (1) of at least one of claims 1 to 8, **characterised in that**
the bushing (3) is captively arranged at the screw (2), and/or
the first narrow (10) forms a non-resilient undercut with the end portion of the threaded portion (7) facing the head (4), and/or
the at least one resilient element (15) engages into the thread (8) of the threaded portion (7) in a force-fitting manner and/or a form-fitting manner, and/or
the resilient element (15) is a radially resilient element.

10. A pre-assembled unit (21), comprising:
a component (20) including a bore (22), and
a fastener (1) of at least one of claims 1 to 9, the fastener (1) being pressed into the bore (22) of the component (20).

11. A method of producing a fastener (1) including a screw (2) and a bushing (3) being captively arranged at the screw (2), especially a fastener (1) of at least one of claims 1 to 9, comprising the steps of:
forming at least one impression (12) at a plain strip of material for later forming a first non-resilient narrow (10) in the rolled condition of the strip of material;
forming at least one resilient element (15) for later forming a second narrow (11) in the rolled condition of the strip of material;
rolling the plain strip of material to attain a raw bushing such that a gap having a first width is formed;
pushing the screw (2) into the interior of the raw bushing in an axial direction;
deforming the raw bushing by a squeezing process being directed in a radial inward direction to attain the bushing (3) including a slot (17) or a gap (19) having a second smaller width such that both narrows (10, 11) have smaller diameters than the outer diameter of the thread (8) of the threaded portion (7) of the screw (2) such that the screw (2) and the bushing (3) are captively connected to one another.

12. The method of claim 11, **characterised in that**
the squeezing process is realized in a relative position between the screw (2) and the raw bushing in which the two narrows (10, 11) are located opposite to the shank portion (6) of the screw (2), and/or
the screw (2) is pushed out of the bushing (3) until the first narrow (10) contacts the threaded portion (7).

## Revendications

1. Élément de liaison (1), avec
une vis (2),
la vis (2) comprenant une tête (4), une portion de tige (6) et une portion filetée (7) avec un filetage (8),
la portion de tige (6) étant orientée vers la tête (4) et la portion filetée (7) étant disposée de façon à être opposée à la tête (4),
la portion de tête (6) présentant un diamètre qui est inférieur au diamètre externe du filetage (8); et
un manchon (3),
le manchon (3) comprenant un premier rétrécissement (10) avec un diamètre qui est inférieur au diamètre externe du filetage (8), **caractérisé en ce que**
le manchon (3) présente un deuxième rétrécissement (11), qui comprend au moins un élément élastique (15) qui s'emboîte dans le filetage (8) et
le manchon (3) présente une fente (17) ou un interstice (19) traversant axialement.

2. Élément de liaison (1) selon la revendication 1, **caractérisé en ce que** le manchon (3) présente une longueur axiale supérieure à la portion filetée (7) de la vis (2).

3. Élément de liaison (1) selon la revendication 1 ou 2, **caractérisé en ce que** l'au moins un élément élastique (15) est disposé axialement à proximité du premier rétrécissement (10), de façon à ce que les deux rétrécissements (10, 11) interagissant avec la partie d'extrémité de la portion filetée (7) située du côté de la tête.

4. Élément de liaison (1) selon au moins une des revendications 1 à 3, **caractérisé en ce qu**'une pluralité d'éléments élastiques (15) sont prévus, qui présentant chacun une extrémité libre, les extrémités libres (16) étant répartis axialement sur le manchon (3) en fonction du pas du filetage (8).

5. Élément de liaison (1) selon au moins une des revendications 1 à 4, **caractérisé en ce que** l'au moins un élément élastique (15) présente une extrémité libre (16) avec des arêtes vives.

6. Élément de liaison (1) selon au moins une des revendications 1 à 4, **caractérisé en ce que** l'au moins un élément élastique (15) présente une extrémité libre (16) arrondie.

7. Élément de liaison (1) selon au moins une des revendications 1 à 6, **caractérisé en ce que** le premier et/ou le deuxième rétrécissement (10, 11) est/sont conçu(s) de façon à constituer en même temps une caractéristique du manchon (3), qui permet une reconnaissance automatique de l'orientation du manchon (3).

8. Élément de liaison (1) selon au moins une des revendications 1 à 7, **caractérisé en ce que** l'au moins un élément élastique (15) du deuxième rétrécissement (11) est positionné, par rapport au premier rétrécissement (10), à la longueur axiale de la portion filetée (7) et au manchon (3) et au reste des dimensions d'un composant (20) d'un sous-ensemble pré-monté (21) et d'un autre composant (23) correspondant, de façon à ce que, lors du montage final, le premier filet de la portion filetée (7) ne puisse s'emboîter dans un trou taraudé (25) dans l'autre composant (23) correspondant que lorsque la portion filetée (7) a été auparavant dégagée du deuxième rétrécissement (11).

9. Élément de liaison (1) selon au moins une des revendications 1 à 8, **caractérisé en ce que**
le manchon (3) est disposé de manière imperdable sur la vis (2) et/ou
le premier rétrécissement (10) constitue, avec la partie d'extrémité, orientée vers la tête (4), de la portion filetée (7), une contre-dépouille non élastique et/ou
l'au moins un élément élastique (15) s'emboîte par friction ou par complémentarité de forme dans le filetage (8) de la portion filetée (7) et/ou
l'élément élastique (15) est un élément élastique radial (15).

10. Sous-ensemble pré-monté (21), avec
un composant (20) avec un alésage (22) et
un élément de liaison (1) selon au moins une des revendications 1 à 9, l'élément de liaison (1) étant comprimé dans l'alésage (22) du composant (20).

11. Procédé de fabrication d'un élément de liaison (1) avec une vis (2) et un manchon (3) disposé dessus de manière imperdable, plus particulièrement d'un élément de liaison (1) selon au moins une des revendications 1 à 9, comprenant les étapes suivantes:
formation d'au moins une empreinte (12) au niveau d'une bande de matériau plate pour la réalisation ultérieure d'un rétrécissement non élastique (10) dans l'état roulé de la bande de matériau;
formation d'au moins un élément élastique (15) pour la réalisation ultérieure d'un deuxième rétrécissement (11) dans l'état roulé de la bande de matériau;
roulage de la bande de matériau plate en un manchon brut grâce à la formation d'un interstice avec une première largeur;
insertion de la vis (2) de manière axiale à l'intérieur du manchon brut;
déformation du manchon brut à l'aide d'un processus d'écrasement radial vers l'intérieur afin d'obtenir du manchon (3) avec une fente (17) ou un interstice (19) avec une deuxième largeur plus petite, de façon à ce que les deux rétrécissements (10, 11) présentent des diamètres inférieurs au diamètre externe du filetage (8) de la portion filetée (7) de la vis (2), de façon à ce que la vis (2) et le manchon (3) soient reliés entre eux de manière imperdable.

12. Procédé selon la revendication 11, **caractérisé en ce que**
le processus d'écrasement a lieu dans une position relative entre la vis (2) et le manchon brut, dans laquelle les deux rétrécissements (10, 11) se superposent à la portion de tige (6) de la vis (2) et/ou
la vis (2) est comprimée hors du manchon (3) jusqu'à ce que le premier rétrécissement (10) vienne en butée contre la portion filetée (7).
